# EUROPÄISCHE PATENTANMELDUNG

(11) **EP 4 521 107 A1**
(43) Veröffentlichungstag der Anmeldung: **12.03.2025**
(21) Anmeldenummer: 23196198.8
(22) Anmeldetag: 08.09.2023
(51) Int. Cl.: G01N 30/86

(54) **HERSTELLVERFAHREN FÜR EINE ANALYSEVORRICHTUNG MITTELS EINER SLIDING-WINDOW-SIMULATION**

(71) Anmelder: Siemens Aktiengesellschaft, 80333 München (DE)
(72) Erfinder: Hangauer, Andreas, 80634 München (DE); Strauch, Piotr, 76761 Rülzheim (DE)
(74) Vertreter: Siemens Patent Attorneys

(57) **Zusammenfassung**

Die Erfindung betrifft ein Verfahren (100) zum Herstellen einer Analysevorrichtung (10) mit mindestens einer Trennvorrichtung (12, 12.1, 12.2) und einer Mehrzahl an Pneumatikmodulen (14). In einem ersten Schritt (110) erfolgt ein Bereitstellen eines pneumatisch gekoppelten Aufbaus (30), der virtuelle Repräsentanzen (35) der mindestens einen Trennvorrichtung (12, 12.1, 12.2) und der Mehrzahl an Pneumatikmodulen (14) umfasst. Weiter wird in einem zweiten Schritt (120) eine Zusammensetzung (22) einer Fluidströmung (20) und zumindest eines Betriebsparameters für den pneumatisch gekoppelten Aufbau (30) vorgegeben. In einem dritten Schritt (130) erfolgt ein Ermitteln zumindest eines Strömungsparameters (32) der Fluidströmung (20) bei einem Durchströmen der zumindest einen Trennvorrichtung (12, 12.1, 12,.) und ein Ausgeben des zumindest einen Strömungsparameters (32) an einen Benutzer und/oder eine Datenschnittstelle. Ebenso gehört zum Verfahren (100) ein vierter Schritt (140), in dem die Analysevorrichtung (10) nach dem im ersten Schritt (110) vorgegebenen pneumatisch gekoppelten Aufbau (30) gefertigt wird, wenn der ermittelte Strömungsparameter (32) einem vorgebbaren Sollwert (33) entspricht. Erfindungsgemäß wird der dritte Schritt (130) basierend auf einer abschnittsweisen Simulation durchgeführt, die der Fluidströmung (20) gleitend folgt.

## Beschreibung

Die Erfindung betrifft ein Verfahren zum Herstellen einer Analysevorrichtung und ein Computerprogrammprodukt, mittels dessen das Herstellungsverfahren teilweise durchführbar ist. Weiter betrifft die Erfindung einen digitalen Zwilling einer Analysevorrichtung, auf dem basierend das beanspruchte Verfahren umsetzbar ist. Ebenso betrifft die Erfindung eine Analysevorrichtung, die durch das beanspruchte Verfahren hergestellt ist und eine Verwendung eines Sliding-Window-Solvers.

Die Patentschrift KR 102511137 B1 offenbart ein Verfahren zur Ähnlichkeitsanalyse von Chromatogramm-Bildern, in denen sich Retentionszeiten von Komponenten einer Gasprobe widerspiegeln. Darin wird eine Matrix mit Zeitserien-Daten angelegt und mittels eines Sliding-Window-Algorithmus ausgewertet.

Aus der Patentanmeldung CN 103657152 A ist ein simuliertes Bewegtbett-Trennsystem bekannt, das verbundene chromatographische Säulen aufweist. Das Bewegtbett-Trennsystem ist dazu ausgebildet, drei Komponenten einer Stoffprobe mit gesteigerter Reinheit voneinander zu trennen.

Für eine Vielzahl an Anwendungen sind angepasste Analysevorrichtungen erforderlich, die anwendungsspezifisch auszulegen sind. Eine derartige anwendungsspezifische Auslegung ist zeitintensiv, komplex und fehleranfällig. Insbesondere ist eine Optimierung einer solchen Auslegung schwierig und aufwendig. Es besteht Bedarf an einem Verfahren, das eine schnelle, zuverlässige und präzise Auslegung und Fertigung von Analysevorrichtungen erlaubt. Der Erfindung liegt die Aufgabenstellung zugrunde, eine Möglichkeit bereitzustellen, die in zumindest einem der skizzierten Aspekte eine Verbesserung bietet.

Die Aufgabenstellung wird durch ein erfindungsgemäßes Verfahren zum Herstellen einer Analysevorrichtung gelöst. Die Analysevorrichtung kann insbesondere als Gasanalysevorrichtung ausgebildet sein. Die herzustellende Analysevorrichtung weist zumindest eine Trennvorrichtung, beispielsweise eine chromatographische Trennsäule, auf und eine Mehrzahl an Pneumatikmodulen. Die Pneumatikmodule können beispielsweise als Druckregler, Drosseln oder Ventile ausgebildet sein. Durch ein Pneumatikmodul wird in der herzustellenden Analysevorrichtung eine durchströmende Fluidströmung fluiddynamisch beeinflusst. In einem ersten Schritt des Verfahrens wird ein pneumatisch gekoppelter Aufbau bereitgestellt, der virtuelle Repräsentanzen der Trennvorrichtung und der Pneumatikmodule umfasst. Durch die pneumatische Kopplung der virtuellen Repräsentanzen im bereitgestellten Aufbau ist ein verkettetes Durchfließen der Trennvorrichtung und der Pneumatikmodule in Form ihrer virtuellen Repräsentanzen nachstellbar. Der pneumatisch gekoppelte Aufbau kann als Datensatz ausgebildet sein, der vorgibt, wie die zumindest eine Trennsäule mit den Pneumatikmodulen in der herzustellenden Analysevorrichtung zu koppeln sind. Weiter kann der pneumatisch gekoppelte Aufbau virtuelle Repräsentanzen von Verbindungsleitungen und deren fluiddynamische Parameter umfassen, über die Trennvorrichtung und die Pneumatikmodule miteinander zu verbinden sind. Der pneumatisch gekoppelte Aufbau kann beispielsweise durch einen Benutzer, der das beanspruchte Verfahren ausführt, bereitgestellt werden.

Darüber hinaus weist das Verfahren einen zweiten Schritt auf, in dem eine Zusammensetzung einer Fluidströmung vorgegeben wird, die mit der herzustellenden Analysevorrichtung zu ermitteln ist. Ebenso wird im zweiten Schritt ein Betriebsparameter für den pneumatisch gekoppelten Aufbau vorgegeben, beispielsweise eine Umgebungstemperatur, einen Umgebungsdruck und/oder einen Förderdruck, mit dem die Fluidströmung durch die herzustellende Analysevorrichtung zu bewegen ist. Durch den Betriebsparameter ist ein anwendungsspezifischer Auslegungsfall charakterisierbar, für den die herzustellende Analysevorrichtung geeignet sein soll. Die Zusammensetzung der Fluidströmung und/oder der zumindest eine Betriebsparameter können jeweils durch einen Benutzer, eine übergeordnete Software-Komponente oder eine Künstliche Intelligenz vorgegeben werden.

Des Weiteren umfasst das Verfahren einen dritten Schritt, in dem zumindest ein Strömungsparameter der Fluidströmung ermittelt wird, der sich bei einem Durchströmen der zumindest einen Trennvorrichtung ergibt. Hierzu wird im dritten Schritt die Fluidströmung in der virtuellen Repräsentanz der zumindest einen Trennvorrichtung nachgestellt. Die Fluidströmung kann eine Stoffprobe und/oder ein Trägergas umfassen. Die Fluidströmung wird im dritten Schritt ebenfalls in Form einer virtuellen Repräsentanz bereitgestellt. Der im dritten Schritt ermittelte Strömungsparameter kann hierbei eine physikalische oder chemische Größe zumindest einer Komponente der Fluidströmung sein, die durch die Trennvorrichtung beeinflussbar ist. Der Strömungsparameter kann insbesondere eine Größe sein, durch die ein Trennverhalten der Fluidströmung in der Trennvorrichtung beschreibbar ist. Der ermittelte Strömungsparameter wird an den Benutzer und/oder an eine Datenschnittstelle ausgegeben. Die Datenschnittstelle kann dazu ausgebildet sein, den Strömungsparameter einem Computerprogrammprodukt zur Verfügung zu stellen, beispielsweise einer graphischen Benutzeroberfläche, oder einer weiteren Verarbeitung im Rahmen des beanspruchten Verfahrens oder außerhalb des beanspruchten Verfahrens zur Verfügung stellen.

Ferner weist das Verfahren einen vierten Schritt auf, in dem der im dritten Schritt ermittelte Strömungsparameter mit einem vorgebbaren Sollwert verglichen wird. Der Sollwert kann beispielsweise durch den Benutzer oder einen Algorithmus vorgegeben werden. Durch den Sollwert kann eine Anforderung definiert sein, die sich aus einer Anforderung ergibt, die an die herzustellende Analysevorrichtung gestellt ist. Im vierten Schritt wird geprüft, ob der Strömungsparameter dem vorgebbaren Sollwert entspricht, also die dadurch festgehaltene Anforderung erfüllt ist. Wenn der Strömungsparameter der dem vorgebbaren Sollwert entspricht, wird die Analysevorrichtung gemäß dem pneumatisch gekoppelten Aufbau gefertigt, der im ersten Schritt vorgegeben wird.

Erfindungsgemäß erfolgt das Ermitteln des Strömungsparameters im dritten Schritt basierend auf einer abschnittsweisen Simulation, der Fluidströmung, also einer virtuellen Repräsentanz der Fluidströmung, gleitend folgt. Dementsprechend wird die Ausbreitung, also das Vorankommen, der Fluidströmung in der Trennvorrichtung erfasst. In einem von der Fluidströmung benetzten Bereich wird ein Abschnitt der Trennvorrichtung per Simulation nachgestellt und darin Wechselwirkungen zwischen der Fluidströmung und der Trennvorrichtung simuliert. Abschnitte vor der Fluidströmung, also Abschnitte der Trennvorrichtung, die noch nicht von der Fluidströmung benetzt sind, werden folglich ignoriert. Ebenso werden Abschnitte, die die Fluidströmung bereits passiert hat und außerhalb des simulierten Abschnitts liegen, ignoriert. Der simulierte Bereich gleitet insofern mit, dass dieser im Wesentlichen fest mit zumindest einer Komponente der Fluidströmung, also ihrer virtuellen Repräsentanz, gekoppelt ist. Hierdurch wird das Prinzip einer Sliding-Window-Simulation verwirklicht. Die Erfindung basiert unter anderem auf der überraschenden Erkenntnis, dass eine derartige Simulationstechnik für eine Fluidströmung, die durch eine Trennvorrichtung fließt, eine hinreichende Präzision, und damit Realitätstreue, bietet. Wechselwirkungen zwischen der Fluidströmung und der Trennvorrichtung sind damit ausgehend von ihren virtuellen Repräsentanzen exakt vorhersagbar, und damit ein zu erwartendes Chromatogramm bei einer entsprechend gefertigten Analysevorrichtung, die mit einer korrespondierenden Fluidströmung beschickt wird. Aufwendige Simulationen, bei denen die gesamte Trennvorrichtung durchgängig nachgestellt wird, sind demzufolge entbehrlich. Das beanspruchte Verfahren ist mit einem erhöhten Automatisierungsgrad und minimierter Benutzereingabe durchführbar. Durch die exakte Ermittlung des Strömungsparameters, die im dritten Schritt per Simulation durchgeführt wird, ist die herzustellende Analysevorrichtung exakt auf den angestrebten Anwendungsfall genauer auslegbar, wodurch insgesamt schnell eine bedarfsgerechte Analysevorrichtung bereitstellbar ist.

In einer Ausführungsform des beanspruchten Verfahrens wird die separate Simulation im dritten Schritt separat für zumindest eine erste und eine zweite Komponente der Fluidströmung durchgeführt. Ebenso wird im dritten Schritt jeweils für die erste und zweite Komponente ein Strömungsparameter ermittelt. Die abschnittsweise Simulation erfolgt hierbei jeweils in einem separaten Abschnitt, der der ersten bzw. zweiten Komponente gleitend folgt. Dementsprechend können die abschnittsweisen Simulationen bei einem simulierten Durchströmen der Trennvorrichtung zum gleichen Zeitpunkt räumlich teilweise überlappend ausgebildet sein oder räumlich disjunkt. Insbesondere kann die erste Komponente der Fluidströmung in einem ersten Simulationsfenster nachgestellt sein, das der ersten Komponente in der Trennvorrichtung folgt. Analog kann die zweite Komponente in einem zweiten Simulationsfenster nachgestellt sein, das der zweiten Komponente in der Trennvorrichtung folgt. Die Simulationsfenster können unabhängig voneinander ausgebildet sein und sich während des beanspruchten Verfahrens zumindest teilweise überlappen. Hierdurch ist unter anderem eine Trennung der Fluidströmung in zumindest die erste und zweite Komponente nachstellbar. Insgesamt sind so die unterschiedlichen physikalischen oder chemischen Eigenschaften unterschiedlicher Komponenten exakt nachstellbar.

In einer weiteren Ausführungsform des beanspruchten Verfahrens erfolgt das Ermitteln des Strömungsparameters im dritten Schritt anhand eines Crank-Nicolson-Verfahrens durchgeführt wird. Mit dem Crank-Nicolson-Verfahren sind Wärmeleitungsgleichungen und partielle Differentialgleichungen durch eine Finite-Differenzen-Methode lösbar. Weiter ist das Crank-Nicolson-Verfahren ohne Bedingungen numerisch stabil und damit in besonderer Weise für das beanspruchte Verfahren geeignet. Das Crank-Nicolson-Verfahren ist weiter dazu geeignet, eine abschnittsweise Simulation durchzuführen, die einem Referenzpunkt, also der Fluidströmung, gleitend folgt. Das Crank-Nicolson-Verfahren ist demzufolge in besonderer Weise für eine Sliding-Window-Simulation geeignet. Plausibilitätsprüfungen innerhalb des beanspruchten Verfahrens, mit denen ein unrealistisches Verhalten der damit durchgeführten Simulation zu prüfen und gegebenenfalls zu unterbinden ist, sind damit entbehrlich. Unter anderem beruht die vorliegende Erfindung auf der überraschenden Erkenntnis, dass physikalische Wechselwirkungen zwischen einer Fluidströmung und einer Trennvorrichtung über das Crank-Nicolson-Verfahren schnell und exakt nachstellbar sind. Alternativ oder ergänzend kann der dritte Schritt auch basierend auf dem Euler-Rückwärtsverfahren durchgeführt werden.

Des Weiteren kann im dritten Schritt des beanspruchten Verfahrens ein Retentionsverhalten der Fluidströmung in der mindestens einen Trennvorrichtung nachgestellt, also simuliert, werden. Das Retentionsverhalten umfasst ein Adsorptionsverhalten und ein Desorptionsverhalten zwischen einer Komponente der Fluidströmung und einer Retentionsbeschichtung einer Wandung und/oder einer Füllung der Trennvorrichtung. Das Retentionsverhalten wird hierbei für zumindest zwei Komponenten der Fluidströmung nachgestellt, so dass zwischen diesen Komponenten ein Trennverhalten der Trennvorrichtung nachstellbar ist. Retentionsverhalten Komponenten der Fluidströmung sind insbesondere mittels des Crank-Nicolson-Verfahrens schnell und gleichzeitig präzise nachstellbar. Der zumindest eine Strömungsparameter, der im dritten Schritt ermittelt wird, kann insbesondere eine Angabe sein, die eine mit der Trennvorrichtung erzielte Trennung zwischen zwei Komponenten der Fluidströmung beschreibt. Insbesondere kann zum Simulieren des Trennverfahrens für jede Komponente der Fluidströmung eine separate abschnittsweise Simulation durchgeführt werden, die der jeweiligen Komponente gleitend folgt.

Ferner kann die Fluidströmung zumindest eine Gaskomponente und/oder zumindest eine Flüssigkeitskomponente umfassen, die durch die Wandung und/oder die Füllung der Trennvorrichtung durch Retention verzögert wird. Eine Kombination einer Gaskomponente mit einer Flüssigkeitskomponente kann beispielsweise als Aerosol ausgebildet sein. Die Flüssigkeitskomponente kann somit ein Spray oder ein Dunst sein. Mittels des beanspruchten Verfahrens ist das Retentionsverhalten von Gasen und Flüssigkeiten nachstellbar, und erlaubt es damit, Analysevorrichtungen für eine breite Spanne an Einsatzzwecken bedarfsgerecht schnell auszulegen und herzustellen.

In einer weiteren Ausführungsform des beanspruchten Verfahrens wird im dritten Schritt auch zumindest ein Strömungsparameter der Fluidströmung beim Durchströmen zumindest eines Pneumatikmoduls ermittelt wird. Beispielsweise sind Druckverluste der Fluidströmung an einem Pneumatikmodul in vielen Fällen algebraisch berechenbar. Hierdurch ist das Verhalten der Fluidströmung, entlang ihrer Strömungsrichtung betrachtet, vor und hinter der Trennvorrichtung schnell und exakt ermittelbar, und somit ein Gesamtverhalten des pneumatisch gekoppelten Aufbaus. Eine Mehrzahl an denkbaren pneumatisch gekoppelten Aufbauten ist beispielsweise durch systematische Variation im Zuge des beanspruchten Verfahrens simulierbar und so eine für den angestrebten Einsatzzweck besonders geeignete Analysevorrichtung bereitstellbar.

Im beanspruchten Verfahren kann der Strömungsparameter, der im dritten Schritt ermittelt wird, ein Peak-Muster der durch die Trennvorrichtung bzw. ihre virtuelle Repräsentanz im pneumatisch gekoppelten Aufbau in ihre Komponenten separierte Fluidströmung sein. Ein derartiges Peak-Muster kann beispielsweise ein Graph eines Chromatogramms sein. Das Peak-Muster umfasst für eine Mehrzahl an Komponenten der Fluidströmung jeweils ein Peak, also eine Diagrammspitze, das bei einem Detektor eine Intensitätsangabe eines Messsignals anzeigt. Die vom Peak im Wesentlichen eingeschlossene Fläche stellt ein Maß für die vorhandene Menge der zugehörigen Komponente der Fluidströmung dar. Das Peak-Muster umfasst somit Angaben darüber, mit welchem Abstand zueinander einzelne Komponenten der Fluidströmung aus der Trennvorrichtung austreten. Folglich zeigt das Peak-Muster ein zu erwartendes Messergebnis eines geeigneten Detektors an, der im Wesentlichen unmittelbar stromab an die Trennvorrichtung angeschlossen ist.

Darüber hinaus kann im beanspruchten Verfahren auch ein Verbreiterungsmechanismus für zumindest ein Peak im Peak-Muster im dritten Schritt nachgestellt werden. Durch den Verbreiterungsmechanismus wird ein Peak gegenüber seiner idealisierten Form deformiert. Beispielsweise wird ein Peak durch Diffusion und ein nicht uniformes radiales Geschwindigkeitsprofil in der Fluidströmung verbreitert. Ebenso ist eine Verbreiterung und/oder eine Peak-Form durch eine nicht-ideale Fluidströmung, beispielsweise eine Probeninjektion, relativ einfach simulierbar. Ebenso ist ein nicht-ideales Verhalten des Detektors nachstellbar, beispielsweise Diffusion oder Konvektion bei einem Wärmeleitfähigkeitsdetektor. Das beanspruchte Verfahren ist somit dazu geeignet, mit relativ geringem Rechenaufwand auch nicht-ideale Betriebszustände der Trennvorrichtung realitätstreu nachzustellen. Hierdurch werden die oben beschriebenen technischen Vorzüge in erhöhtem Ausmaß erzielt.

Ferner kann im beanspruchten Verfahren eine Form zumindest eines Peaks im Peak-Muster mittels einer Gauß-Funktion ermittelt werden. Die Form einer Gauß-Funktion, also ihres Graphen, ist durch relativ wenige Koeffizienten anpassbar. Weiter existieren für unterschiedliche Mechanismen, insbesondere Verbreiterungsmechanismen, bekannte Zusammenhänge, die es erlauben, Koeffizienten für eine Gauß-Funktion entsprechend anzupassen. Mittels der Gauß-Funktion, und damit ihrer Koeffizienten, ist ein Peak im Peak-Muster mit einem reduzierten Datensatz präzise beschreibbar. Das beanspruchte Verfahren ist insgesamt datenökonomisch und dadurch im dritten Schritt schnell durchführbar. Ebenso kann die Form des Peaks mittels einer Superposition von mehreren Gauß-Funktionen ermittelt werden.

Ebenso kann die abschnittsweise Simulation im dritten Schritt auf einer Breite, also einer Fensterbreite, erfolgen, die durch den Benutzer und/oder einen Algorithmus fest vorgegeben ist. Unter der Breite ist hierbei die Abmessung des simulierten Abschnitts entlang der Strömungsrichtung der Fluidströmung zu verstehen, also einer Fensterbreite zumindest eines Simulationsfensters der Sliding-Window-Simulation. Alternativ kann die Breite, auf der die abschnittsweise Simulation durchgeführt wird, auch während des dritten Schritts dynamisch vorgegeben werden, beispielsweise mittels einer Künstlichen Intelligenz.

In einer weiteren Ausführungsform des beanspruchten Verfahrens wird auch ein Strömungsparameter für die Fluidströmung, also ihre virtuelle Repräsentanz, ermittelt, die in einer Verbindungsleitung vorliegt. Dazu liegt im pneumatisch gekoppelten Aufbau eine virtuelle Repräsentanz der Verbindungsleitung vor. Durch eine Verbindungsleitung ist die Trennvorrichtung mit einem Pneumatikmodul verbindbar oder zwei Pneumatikmodule untereinander. Dies gilt analog auch für deren jeweilige virtuelle Repräsentanzen. Insbesondere sind dadurch leitungslängenabhängige Druckverluste und/oder Peak-Verbreiterungen, beispielsweise durch Diffusion, in der Fluidströmung bzw. ihrer virtuellen Repräsentanz ermittelbar. Hierdurch wird die Realitätstreue beim dritten Schritt des beanspruchten Verfahrens weiter gesteigert.

Weiter können im beanspruchten Verfahren der erste, zweite und dritte Schritt unter Variieren des pneumatisch gekoppelten Aufbaus wiederholt durchgeführt werden. Das Variieren des pneumatisch gekoppelten Aufbaus kann als eine Änderung einer Länge, eines Durchmessers, einer Innenbeschichtung, einer Füllung der Trennvorrichtung bzw. ihrer virtuellen Repräsentanz sein. Analog kann auch zumindest ein Pneumatikmodul und/oder eine Verbindungsleitung bzw. deren jeweilige virtuelle Repräsentanz variiert werden. Das Variieren kann systematisch erfolgen, mittels eines Optimierungsalgorithmus und/oder beispielsweise durch eine Künstliche Intelligenz. Das Variieren erfolgt hierbei solange, wie der im dritten Schritt ermittelte Strömungsparameter den zugehörigen vorgebbaren Sollwert verfehlt, also die dadurch festgehaltene Anforderung an die herzustellende Analysevorrichtung nicht erfüllt. Da das beanspruchte Verfahren mit relativ niedrigem Rechenaufwand durchführbar ist, ist auch eine häufige Wiederholung infolge des oben beschriebenen Variierens in akzeptabler Zeit möglich. Dementsprechend ist das beanspruchte Verfahren auch zu einem kleinschrittigen Variieren des pneumatisch gekoppelten Aufbaus geeignet, wodurch ein konstruktives Optimum für die herzustellende Analysevorrichtung schnell erreichbar ist. Insgesamt sind mit dem beanspruchten Verfahren Analysevorrichtungen herstellbar, deren technisches Potential verstärkt ausgenutzt wird.

Die zugrundeliegende Aufgabenstellung wird ebenso durch ein erfindungsgemäßes Computerprogrammprodukt gelöst. Das Computerprogrammprodukt ist zu einem Ermitteln zumindest eines Strömungsparameters einer Fluidströmung eingerichtet, die durch eine Trennvorrichtung einer Analysevorrichtung strömt. Das Computerprogrammprodukt ist dazu geeignet, einen pneumatisch gekoppelten Aufbau mit zumindest einer Trennvorrichtung und einer Mehrzahl an Pneumatikmodulen, also deren jeweiligen virtuellen Repräsentanzen, zu speichern und eine Fluidströmung bzw. deren virtuelle Repräsentanz nachzustellen, die den pneumatisch gekoppelten Aufbau durchströmt. Ebenso ist das Computerprogrammprodukt dazu geeignet, eine Zusammensetzung der Fluidströmung bzw. deren virtueller Repräsentanz einzustellen. Erfindungsgemäß ist das Computerprogrammprodukt dazu ausgebildet, ein Verfahren gemäß einer der oben skizzierten Ausführungsformen zumindest teilweise umzusetzen, insbesondere zumindest dessen ersten, zweiten, dritten und/oder vierten Schritt. Das Computerprogrammprodukt kann hierzu auf einem Speicher, beispielsweise einer Festplatte, einem Arbeitsspeicher, einem optischen Datenträger und/oder einem FPGA zumindest vorübergehend ausführbar gespeichert. Das Computerprogrammprodukt erlaubt eine schnelle, zumindest teilweise automatische Auslegung von Analysevorrichtungen, die bei einem entsprechenden Verfahren gefertigt werden.

Gleichermaßen wird die oben dargelegte Aufgabe durch einen erfindungsgemäßen digitalen Zwilling einer Analysevorrichtung gelöst. Die im digitalen Zwilling modellierte, also simulierbar abgebildete, Analysevorrichtung umfasst zumindest eine Trennvorrichtung und eine Mehrzahl an Pneumatikmodulen. Dazu umfasst der digitale Zwilling jeweils virtuelle Repräsentanzen der zumindest einen Trennvorrichtung und der Pneumatikmodule. Erfindungsgemäß ist der digitale Zwilling durch ein Verfahren nach einer der oben dargestellten Ausführungsformen hergestellt. Der digitale Zwilling kann insbesondere als Zwischenprodukt des Verfahrens ausgebildet sein, das nach dem vierten Schritt vorliegt. Der digitale Zwilling kann als digitaler Zwilling im Sinne der Anmeldung US 2017/0286572 A1 ausgebildet sein. Der Offenbarungsgehalt von US 2017/0286572 A1 wird durch Verweisung in die vorliegende Anmeldung miteinbezogen.

Die eingangs skizzierte Aufgabenstellung wird auch durch eine erfindungsgemäße Analysevorrichtung gelöst. Die Analysevorrichtung umfasst eine Trennvorrichtung und eine Mehrzahl an Pneumatikmodulen. Die Trennvorrichtung der Analysevorrichtung ist pneumatisch mit den Pneumatikmodulen verbunden. Die Analysevorrichtung ist erfindungsgemäß mittels eines Verfahrens hergestellt, das gemäß einer der oben beschriebenen Ausführungsformen ausgebildet ist. Durch das Verfahren ist insbesondere ein digitaler Zwilling herstellbar, der wiederum als Vorlage und/oder Bauvorschrift für die beanspruchte Analysevorrichtung dient. Insbesondere kann aus dem digitalen Zwilling manuelle oder automatisch, beispielsweise mittels eines Optimierungsalgorithmus oder einer Künstlichen Intelligenz, für zumindest ein Pneumatikmodul ein Steuerdatensatz für eine Werkzeugmaschine ermittelt werden, auf der das Pneumatikmodul gefertigt wird. Die beanspruchte Analysevorrichtung ist ausgehend vom zugrundeliegenden Verfahren mit einem erhöhten Grad an Automatisierung fertigbar, was deren Herstellung beschleunigt und kosteneffizient gestaltet. Die Vorzüge des zugrundeliegenden Verfahrens bzw. des damit gewonnenen digitalen Zwillings werden durch die erfindungsgemäße Analysevorrichtung konkret verwirklicht und stellt eine wirtschaftlich relevante Verkörperung des beanspruchten Verfahrens dar.

Weiter wird die zugrunde liegende Aufgabe durch eine erfindungsgemäße Verwendung eines sogenannten Sliding-Window-Solvers Der Sliding-Window-Solver wird darin zum Ermitteln eines Strömungsparameters einer Fluidströmung eingesetzt. Erfindungsgemäß fließt die Fluidströmung, die mit dem Sliding-Window-Solver in Form ihrer virtuellen Repräsentanz nachgestellt bzw. berechnet wird, durch eine Trennvorrichtung einer Analysevorrichtung, also einer virtuellen Repräsentanz hiervon. Insbesondere kann der Sliding-Window-Solver dazu eingesetzt werden, eines der Verfahren gemäß einer der skizzierten Ausführungsformen umzusetzen, beispielsweise bei dessen drittem Schritt. Der Erfindung liegt unter anderem die überraschende Erkenntnis zugrunde, dass ein Sliding-Window-Solver dazu geeignet ist, einen pneumatisch gekoppelten Aufbau einer Analysevorrichtung, also ihrer virtuellen Repräsentanz, schnell und exakt nachzustellen. Insbesondere ist ein solches Nachstellen mit dem Sliding-Window-Solver derart leistungsfähig, dass damit eine Analysevorrichtung schnell und exakt auslegbar ist. Die technischen Vorteile des zugrunde liegenden Verfahrens werden durch den Sliding-Window-Solver in gesteigertem Umfang erzielt. Dies Merkmale des entsprechenden Verfahrens sind damit auf die beanspruchte Verwendung des Sliding-Window-Solvers übertragbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die einzelnen Merkmale der in den Figuren gezeigten Ausführungsformen auch untereinander und mit den oben skizzierten Merkmalen kombinierbar. Es zeigen im Einzelnen:
- FIG 1: einen schematischen Ablauf einer Ausführungsform des beanspruchten Verfahrens;
- FIG 2: einen schematischen Ablauf eines Stadiums einer ersten Ausführungsform des beanspruchten Verfahrens.

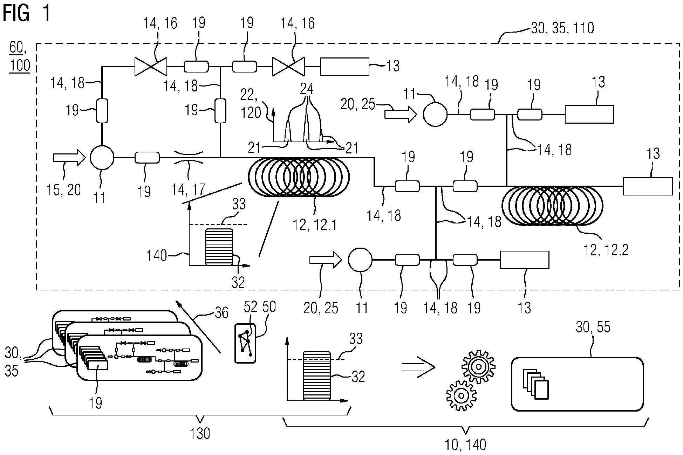

In FIG 1 ist schematisch ein Ablauf einer Ausführungsform des beanspruchten Verfahrens 100 dargestellt. Das Verfahren 100 ist darauf gerichtet, eine Analysevorrichtung 10 herzustellen, die als Gasanalysevorrichtung ausgebildet sein kann und deren virtuelle Repräsentanz 35 in FIG 1 gezeigt ist. Die herzustellende Analysevorrichtung 10 umfasst als Trennvorrichtungen 12 eine erste und eine zweite Trennvorrichtung 12.1, 12.2, die jeweils mit einer Mehrzahl an Pneumatikmodulen 14 pneumatisch verbunden ist. Die Pneumatikmodule 14 können jeweils als Ventil 16, als Drossel 17 oder als Verbindungsleitung 18 ausgebildet sein. Die Pneumatikmodule 14 sind jeweils dazu ausgebildet, auf zumindest einen Strömungsparameter 32 einer Fluidströmung 20 einzuwirken, die durch das jeweilige Pneumatikmodul 14 fließt. Die Pneumatikmodule 14 und zumindest eine der Trennvorrichtungen 12 gehören zu einem pneumatisch gekoppelten Aufbau 30, der im beanspruchten Verfahren 100 in einem ersten Schritt 110 bereitgestellt wird. Im pneumatische gekoppelten Aufbau 30 ist zur zumindest einen Trennvorrichtung 12 und zu den zugehörigen Pneumatikmodulen 14 je eine virtuelle Repräsentanz 35 hinterlegt. Folglich ist der pneumatisch gekoppelte Aufbau 30 eine Mehrzahl an funktionsorientiert kombinierten virtuellen Repräsentanzen 35. Weiter umfasst der pneumatisch gekoppelte Aufbau 30 Gaseinlässe 11, über die je eine Fluidströmung 20 zuführbar ist, also deren virtuelle Repräsentanzen 35. Analog umfasst der pneumatisch gekoppelte Aufbau 30 Gasauslässe 13, über die je eine Fluidströmung 20 abführbar ist. Der pneumatisch gekoppelte Aufbau 30 ist dazu ausgebildet, dass eine Fluidströmung 20, also deren virtuelle Repräsentanz 35, über einen Gaseinlass 11 in den pneumatisch gekoppelten Aufbau 30 eintritt und diesen über einen Gasauslass 13 wieder verlässt. Die Fluidströmung 25 kann eine Stoffprobe 15 und/oder ein Trägergas 25 umfassen. Die Pneumatikmodule 14 stellen für die sie passierende Fluidströmung 20 einen Strömungswiderstand 19 dar. Durch den Strömungswiderstand 19 wird einer der Strömungsparameter 32 der Fluidströmung 20 beeinflusst. Weiter ist der Strömungswiderstand 19 durch nicht näher gezeigte Konstruktionsparameter des zugehörigen Pneumatikmoduls 14 bestimmt.

Das Verfahren 100 umfasst einen ersten Schritt 110, in dem der pneumatisch gekoppelte Aufbau 30, wie in FIG 1 exemplarisch gezeigt, bereitgestellt wird, beispielsweise durch einen Benutzer, der das Verfahren 100 durchführt oder durch eine Vorlage. Der pneumatisch gekoppelte Aufbau 30 kann dazu über eine graphische Benutzeroberfläche angezeigt werden und durch den Benutzer angepasst werden. Der pneumatisch gekoppelte Aufbau 30 ist pneumatisch gekoppelt ausgebildet, so dass die Fluidströmung 20, also ihre virtuelle Repräsentanz 35, nur über zumindest einen Gaseinlass 11 eintreten kann und nur über zumindest einen Gasauslass 13 austreten kann.

Des Weiteren gehört ein zweiter Schritt 120 zum beanspruchten Verfahren 100, in dem eine Zusammensetzung 22 der Fluidströmung 20 vorgegeben wird, also deren virtueller Repräsentanz 35. Ebenso wird zumindest ein Betriebsparameter vorgegeben, der auf die nachzustellende Fluidströmung 20 einwirkt, beispielweise eine Umgebungstemperatur. Die Fluidströmung 20 umfasst eine Mehrzahl an Komponenten 21 und ihr Durchströmen des pneumatisch gekoppelten Aufbaus 30 ist im beanspruchten Verfahren 100 nachzustellen. Die Komponenten 21 werden durch die Trennvorrichtung 12 derart separiert, dass diese beim Erreichen eines nicht näher gezeigten Detektors zeitlich hintereinander ankommen und am Detektor je Komponente 12 eine Signalspitze bzw. ein Peak 24 hervorrufen. Die Fluidströmung 20 ist dabei als eine Stoffprobe 15 ausgebildet, die durch eine der Trennvorrichtungen 12, nämlich der ersten Trennvorrichtung 12.1, zu leiten ist bzw. deren Verhalten hierbei über ihre jeweiligen virtuellen Repräsentanzen 35 nachgestellt wird. Die Zusammensetzung 22 der Fluidströmung 20 wird im zweiten Schritt 120 beispielsweise durch den Benutzer vorgegeben.

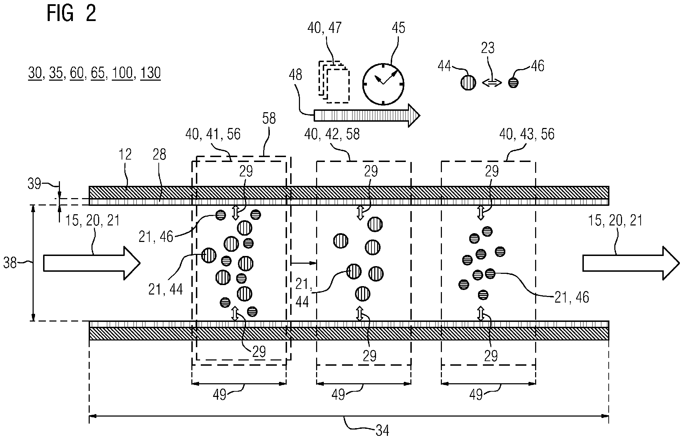

Ebenso gehört ein dritter Schritt 130 zum beanspruchten Verfahren 100, in dem zumindest ein Strömungsparameter 32 der Fluidströmung 20 ermittelt wird, der sich beim Durchströmen der Trennvorrichtung 12, also der ersten Trennvorrichtung 12.1, einstellt. Hierzu wird ein in FIG 1 nicht näher dargestelltes Fließverhalten und Retentionsverhalten einzelner Komponenten 21 der Fluidströmung 20 zumindest in der Trennvorrichtung 12 mit ihren jeweiligen virtuellen Repräsentanzen 35 nachgestellt. Ausführungsformen des dritten Schritts 130 sind in den FIG 2, 3 näher gezeigt. Weiter wird im dritten Schritt 130 der ermittelte Strömungsparameter 32 an den Benutzer und/oder eine nicht näher gezeigte Datenschnittstelle ausgegeben. Durch die Ausgabe an die Datenschnittstelle ist der ermittelte Strömungsparameter 35 zumindest vorübergehend speicherbar.

Ferner umfasst das beanspruchte Verfahren 100 einen vierten Schritt 140, in dem der im dritten Schritt 130 ermittelte Strömungsparameter 32 mit einem vorgebbaren Sollwert 33 verglichen wird. Der Sollwert 33 kann durch den Benutzer vorgegeben sein oder aus einer Eingabe des Benutzers ermittelt werden. Wenn der ermittelte Strömungsparameter 32 den Sollwert 33 verfehlt, also die dadurch abgebildete Anforderung an den pneumatisch gekoppelten Aufbau 30 nicht erfüllt, werden der erste, zweite und dritte Schritt 110, 120, 130 wiederholt durchgeführt. Das wiederholte Durchführen erfolgt hierbei unter Variieren 36 des pneumatisch gekoppelten Aufbaus 30. Hierbei werden Konstruktionsparameter zumindest einer der Trennvorrichtungen 12, 12.1, 12.2 und/oder zumindest eines Pneumatikmoduls 14 mittels einer Künstlichen Intelligenz 50 variiert. Die Künstliche Intelligenz 50 ist hierbei als sogenanntes Neuronales Netz 52 ausgebildet, das mit Trainingsdatensätzen trainierbar ist. Dementsprechend wird durch das Variieren 36 eine Mehrzahl an pneumatisch gekoppelten Aufbauten 30 erzeugt, in denen sich zumindest ein Strömungswiderstand 19 ändert. Jeder der so erzeugten pneumatisch gekoppelten Aufbauten 30 weist somit eine Mehrzahl an virtuellen Repräsentanzen 35 unterschiedlicher Pneumatikmodule 14 und/oder Trennvorrichtungen 12, 12.1, 12.2 auf. Der erste, zweite und dritte Schritt 120, 120, 130 werden solange unter Variieren 36 des pneumatisch gekoppelten Aufbaus 30 durchgeführt, bis der zumindest eine Strömungsparameter 32 dem zugehörigen Sollwert 35 entspricht.

Wenn der ermittelte Strömungsparameter 32 dem Sollwert 33 entspricht, also die dadurch dargestellte Anforderung erfüllt, wird der pneumatisch gekoppelte Aufbau 30 ausgegeben und darauf basierend die Analysevorrichtung 10 hergestellt. Der pneumatische Aufbau 30, bei dem der zumindest eine Strömungsparameter 32 dem Sollwert 33 entspricht, stellt im beanspruchten Verfahren 100 ein Zwischenprodukt dar, das als sogenannter Digitaler Zwilling 55 der herzustellenden Analysevorrichtung 10 zumindest vorübergehend gespeichert wird. Der Digitale Zwilling 55 der herzustellenden Analysevorrichtung 10 kann an den Benutzer ausgegeben werden. Das beanspruchte Verfahren 100 ist durch ein Computerprogrammprodukt 60 ausführbar, das monolithisch ausgebildet sein kann oder eine Mehrzahl an Teilprogrammen umfassen kann, die in einem bestimmungslosen Betrieb zusammenwirken und so die Funktionalität des Verfahrens 100 verwirklichen. Ein Betriebsverhalten der Analysevorrichtung 10, die mittels des beanspruchten Verfahrens 100 hergestellt ist, ist durch den Digitalen Zwilling 55 nachstellbar, also simulierbar.

Ein Stadium einer ersten Ausführungsform des beanspruchten Verfahrens 100 ist in FIG 2 schematisch gezeigt. Im Einzelnen ist in FIG 2 detailliert ein dritter Schritt 130 des beanspruchten Verfahrens 100 dargestellt, der beispielsweise in FIG 1 durchführbar ist. Die Ausführungsform gemäß FIG 2 geht davon aus, dass der erste und zweite Schritt 110, 120 des beanspruchten Verfahrens 100, wie exemplarisch in FIG 1 gezeigt, bereits erfolgreich abgeschlossen sind. Es ist ein eine Trennvorrichtung 12, insbesondere eine erste Trennvorrichtung 12.1, in ihrem Aufbau vorgeben. Der Aufbau, also die zugehörige virtuelle Repräsentanz 35 der Trennvorrichtung 12, ist durch Konstruktionsparameter definiert, beispielsweise einen Innendurchmesser 38 der Trennvorrichtung 12, ihre Länge 34, und/oder eine Schichtdicke 39 einer Retentionsbeschichtung 28 auf einer Wandung 26 der Trennvorrichtung 12. Diese werden im ersten Schritt 110 vorgegeben. Ferner ist eine Zusammensetzung 21 einer Stoffprobe 15, also ihrer virtuellen Repräsentanz 35, vorgegeben, die als Fluidströmung 20 die Trennvorrichtung 12 durchströmt.

Im dritten Schritt 130 wird die Trennvorrichtung 12 und die darin befindliche Fluidströmung 20 abschnittsweise nachgestellt, wobei die zugehörigen Abschnitte 40 einer Strömungsrichtung der Fluidströmung 20 folgen, die in FIG 2 durch Pfeile dargestellt ist. In einem ersten Abschnitt 41 befindet sich ein Teil der Fluidströmung 20, die als Komponenten 21 eine erste und eine zweite Komponente 44, 46 aufweist, die miteinander vermischt sind. Die erste und zweite Komponente 44, 46 treten mit der Retentionsbeschichtung 28 in der Trennvorrichtung 20 in Wechselwirkung. Die Retentionsbeschichtung 28 hält die erste und zweite Komponente 44, 46 unterschiedlich lang zurück, so dass eine Retentionswirkung 29 eintritt. Infolge der Retentionswirkung 29 mit der Retentionsbeschichtung 28 wird die zweite Komponente 46 stärker zurückgehalten als die erste Komponente 44. In einem zweiten Abschnitt 42 der Trennvorrichtung 12 liegt die erste Komponente 44 separat, also getrennt von der zweiten Komponente 46, vor. Korrespondierend liegt die zweite Komponente 46 separat in einem dritten Abschnitt 43 vor. Die Retentionswirkung 29 auf die erste und zweite Komponente 44, 46 der Fluidströmung 20, also deren entsprechende virtuellen Repräsentanzen 25, wird im dritten Schritt 130 zunächst nur für den ersten Abschnitt 41 durchgeführt. Die erste Komponente 56 wird in einem ersten Simulationsfenster 56 simuliert, das der ersten Komponente 44 folgt. Korrespondierend wird die zweite Komponente 46 in einem zweiten Simulationsfenster 48 simuliert. Das erste und zweite Simulationsfenster 56, 58 folgen jeweils der ersten bzw. zweiten Komponente 44, 46. Im Bereich des ersten Abschnitts 41 liegen die erste und zweite Komponente 44, 46 vermischt vor, so dass sich das erste und zweite Simulationsfenster 56, 58 im Wesentlichen überlappen. Es wird die Retentionswirkung 29 für weitere Abschnitte 40, die zwischen dem ersten und zweiten Abschnitt 41, 42 bzw. dem ersten und dritten Abschnitt 41, 43 liegen, schrittweise ermittelt. Dabei ist eine Fensterbreite 49 des ersten, zweiten und dritten Abschnitts 41, 42, 43, also den Simulationsfenstern 56, 58, konstant.

Der Grad an Trennung zwischen der ersten und zweiten Komponente 44, 46 stellt hierbei einen Strömungsparameter 32 dar, der im dritten Schritt 130 ermittelt wird. Der Strömungsparameter 32 wird in einer Mehrzahl an Abschnitten 30 ermittelt, die zueinander benachbart sind und sich teilweise überlappen. Die Abschnitte 30 werden hierbei jeweils separat für die erste und zweite Komponente 44, 46 simuliert Der Abschnitte 30, in denen der Strömungsparameter 32 ermittelt wird, und damit die Simulationsfenster 56, 58, folgen jeweils der der ersten bzw. zweiten Komponente 44, 46 der Fluidströmung 20 mit deren jeweiliger Strömungsgeschwindigkeit. Infolgedessen werden, auf die virtuellen Repräsentanzen 35 der ersten und zweiten Komponente 44, 46 der Fluidströmung 20 übertragen, immer die gleichen Teilchen dieser Komponenten 44, 46 und ihre zugehörige Retentionswirkung 29 simuliert. Die benachbart liegenden Abschnitte 40 jeweils für die erste und zweite Komponente 44, 46, die so nachgestellt werden, definieren für sich gegenseitig Randbedingungen 47. Abhängig von der Strömungsgeschwindigkeit der ersten bzw. zweiten Komponente 44, 46 der Fluidströmung 20 ergeben sich Zeitschritte 45, die die für die jeweiligen Abschnitte 40 bestimmten Werte für den Strömungsparameter 32 der ersten bzw. zweiten Komponente 44, 46 voneinander separieren. Die Zeitschritte 45 geben ebenso für das erste und zweite Simulationsfenster 56, 58 einen Mitlauf 48 mit der ersten bzw. zweiten Komponente 44, 46 vor. Aufgrund der Retentionswirkungen 29 auf die erste und zweite Komponente 44, 46 laufen das erste und zweite Simulationsfenster 56, 58 auseinander und sind, wie in FIG 2, disjunkt. Ein solcher Trenngrad 23 ist in FIG 2 ebenso versinnbildlicht. Hierdurch ergibt sich insgesamt ein Mitlauf 48 der Abschnitte 40 vom ersten bis zum zweiten Abschnitt 42. Durch das so erzielte Nachstellen der Retentionswirkung 29 auf die erste und zweite Komponente 44, 46 der Fluidströmung 20 wird das Prinzip einer Sliding-Window-Simulation verwirklicht. Dadurch ist der dritte Schritt 130 schnell durchführbar. Je länger die Trennvorrichtung 12 ist, umso höher ist die Zeitersparnis im dritten Schritt 130 im Vergleich zu einer Simulation, bei der die Trennvorrichtung 12 und die Fluidströmung 20, also ihre virtuellen Repräsentanzen 35, auf einmal mit ihrer Retentionswirkung 29 nachgestellt werden. Dementsprechend ist der Trenngrad 23 als Strömungsparameter 32 schnell ermittelbar. Dadurch ist es mit akzeptablem Rechenaufwand möglich, eine Vielzahl an pneumatisch gekoppelten Aufbauten 30 in mehreren Durchläufen des ersten, zweiten und dritten Schritts 110, 120, 130 nachzustellen und so durch Variieren 36 einen pneumatisch gekoppelten Aufbau 30 zu ermitteln, der dem Sollwert 33 entspricht. Dadurch ist eine herzustellende Analysevorrichtung 10 zumindest teilweise selbsttätig auslegbar. Der Erfindung liegt unter anderem die Erkenntnis zugrunde, dass durch eine Verwendung eines entsprechend geeigneten Sliding-WIndow-Solvers 65 der dritte Schritt 130 mit einer erhöhten Geschwindigkeit durchführbar ist, so dass wiederum ein Variieren 36 des pneumatisch gekoppelten Aufbaus 30 praktikabel ist. Dadurch wird insgesamt die Herstellung einer entsprechenden Analysevorrichtung 10 vereinfacht und beschleunigt.

## Patentansprüche

1. Verfahren (100) zum Herstellen einer Analysevorrichtung (10) mit mindestens einer Trennvorrichtung (12, 12.1, 12.2) und einer Mehrzahl an Pneumatikmodulen (14), umfassend die Schritte:
a) Bereitstellen eines pneumatisch gekoppelten Aufbaus (30), der virtuelle Repräsentanzen (35) der mindestens einen Trennvorrichtung (12, 12.1, 12.2) und der Mehrzahl an Pneumatikmodulen (14) umfasst;
b) Vorgeben einer Zusammensetzung (22) einer Fluidströmung (20) und zumindest eines Betriebsparameters () für den pneumatisch gekoppelten Aufbau (30);
c) Ermitteln zumindest eines Strömungsparameters (32) der Fluidströmung (20) bei einem Durchströmen der zumindest einen Trennvorrichtung (12, 12.1, 12,.) und Ausgeben des zumindest einen Strömungsparameters (32) an einen Benutzer und/oder eine Datenschnittstelle;
d) Fertigen der Analysevorrichtung (10) nach dem im Schritt a) vorgegebenen pneumatisch gekoppelten Aufbau (30), wenn der ermittelte Strömungsparameter (32) einem vorgebbaren Sollwert (33) entspricht;
**dadurch gekennzeichnet, dass** Schritt c) basierend auf einer abschnittsweisen Simulation erfolgt, die der Fluidströmung (20) gleitend folgt.

2. Verfahren (100) nach Anspruch 1, **dadurch gekennzeichnet, dass** die abschnittsweise Simulation in Schritt c) separat für eine erste und eine zweite Komponente (44, 46) der Fluidströmung (20) durchgeführt wird, für die jeweils ein Strömungsparameter (32) ermittelt wird.

3. Verfahren (100) nach Anspruch 1 oder 2, **dadurch gekennzeichnet, dass** das Ermitteln des Strömungsparameters (32) im Schritt c) anhand eines Crank-Nicolson-Verfahrens durchgeführt wird.

4. Verfahren (100) nach einem der Ansprüche 1 bis 3, **dadurch gekennzeichnet, dass** im Schritt c) ein Retentionsverhalten (29) der Fluidströmung () in der mindestens einen Trennvorrichtung (12, 12.1, 12.2) nachgestellt wird.

5. Verfahren (100) nach Anspruch 4, **dadurch gekennzeichnet, dass** die Fluidströmung (20) zumindest eine Gaskomponente, zumindest eine Flüssigkeitskomponente und/oder zumindest eine Feststoffkomponente umfasst, die durch eine Retentionsbeschichtung (28) einer Wandung (26) und/oder eine Füllung der Trennvorrichtung (12, 12.1, 12.2) durch Retention verzögert wird.

6. Verfahren (100) nach einem der Ansprüche 1 bis 5, **dadurch gekennzeichnet, dass** im Schritt c) auch zumindest ein Strömungsparameter (32) der Fluidströmung (20) beim Durchströmen zumindest eines Pneumatikmoduls (14) ermittelt wird.

7. Verfahren (100) nach einem der Ansprüche 1 bis 6, **dadurch gekennzeichnet, dass** der Strömungsparameter (32) ein Peak-Muster der durch die Trennvorrichtung (12, 12.1, 12.2) in ihre Komponenten (44, 46) separierten Fluidströmung (20) ist.

8. Verfahren (100) nach Anspruch 7, **dadurch gekennzeichnet, dass** im Schritt c) ein Verbreiterungsmechanismus für zumindest ein Peak (24) nachgestellt wird.

9. Verfahren (100) nach Anspruch 7 oder 8, **dadurch gekennzeichnet, dass** eine Form zumindest eines Peaks (24) im Peak-Muster mittels einer Gauß-Funktion ermittelt wird.

10. Verfahren (100) nach einem der Ansprüche 1 bis 9, **dadurch gekennzeichnet, dass** die abschnittsweise Simulation auf einer Fensterbreite (49) erfolgt, die durch einen Benutzer und/oder einen Algorithmus fest vorgegeben ist.

11. Verfahren (100) nach einem der Ansprüche 1 bis 10, **dadurch gekennzeichnet, dass** darin auch ein Strömungsparameter (32) der Fluidströmung (20) in einer Verbindungsleitung (18) ermittelt wird.

12. Verfahren (100) nach einem der Ansprüche 1 bis 11, **dadurch gekennzeichnet, dass** die Schritte a), b) und c) unter Variieren des pneumatisch gekoppelten Aufbaus (30) wiederholt durchgeführt werden.

13. Computerprogrammprodukt (60) zum Ermitteln eines Strömungsparameters (32) einer Fluidströmung (20) durch eine Trennvorrichtung (12, 12.1, 12.2) einer Analysevorrichtung (10), **dadurch gekennzeichnet, dass** das Computerprogrammprodukt (60) dazu eingerichtet ist, zumindest Schritt c) eines Verfahrens (100) nach einem der Ansprüche 1 bis 12 durchzuführen.

14. Digitaler Zwilling (55) einer Analysevorrichtung (10), die zumindest eine Trennvorrichtung (12, 12.1, 12.2) und eine Mehrzahl an Pneumatikmodulen (14) umfasst, **dadurch gekennzeichnet, dass** der Digitale Zwilling (55) durch ein Verfahren (100) nach einem der Ansprüche 1 bis 12 hergestellt ist.

15. Analysevorrichtung (10), umfassend zumindest eine Trennvorrichtung (12, 12.1, 12.2), die pneumatisch mit einer Mehrzahl an Pneumatikmodulen (14) gekoppelt ist, **dadurch gekennzeichnet, dass** die Analysevorrichtung (10) mittels eines Verfahrens (100) nach einem der Ansprüche 1 bis 12 hergestellt ist.

16. Verwendung eines Sliding-Window-Solvers (65) zum Ermitteln eines Strömungsparameters (32) einer Fluidströmung (20), **dadurch gekennzeichnet, dass** die Fluidströmung (20) durch eine Trennvorrichtung (12, 12.2, 12.2) einer Analysevorrichtung (10) fließt.
